# EUROPEAN PATENT APPLICATION

(11) **EP 4 834 120 A1**
(43) Date of publication of application: **04.11.2026**
(21) Application number: 25172984.4
(22) Date of filing: 28.04.2025
(51) Int. Cl.: A23D 9/00, A23D 9/007, A23K 20/158, A23K 50/40

(54) **OIL COMPOSITIONS COMPRISING OMEGA-3 AND OMEGA-6 FATTY ACIDS**

(71) Applicant: HHNW Singapore Pte. Limited, 048619 Singapore (SG)
(72) Inventor: BEDI, Akash, Fermoy, Co. Cork, P61K202 (IE); FELICE, Valeria, Fermoy, Co. Cork, P61K202 (IE); CASTENADA, Euridice, Fermoy, Co. Cork, P61K202 (IE); CARVAJAL, Carlota, Fermoy, Co. Cork, P61K202 (IE); O BRIEN, Rachel, Fermoy, Co. Cork, P61K202 (IE); LANE, Jonathan, Fermoy, Co. Cork, P61K202 (IE); WEATHERHEAD, Greg, Fermoy, Co. Cork, P61K202 (IE)
(74) Representative: Straus, Alexander

(57) **Abstract**

The present invention relates to oil compositions comprising an improved profile of essential omega-3 and omega-6 fatty acids to improve skin function and support mobility in individuals. The present invention pertains in particular to oil compositions comprising selected sources for these poly-unsaturated fatty acids and to applications thereof in the treatment of skin and mobility conditions affected by inflammatory conditions.

## Description

### BACKGROUND

### 1. Technical Field

The present invention relates to oil compositions comprising an improved profile of essential omega-3 and omega-6 fatty acids to improve skin function and support mobility in individuals. The present invention pertains in particular to oil compositions comprising selected sources for these poly-unsaturated fatty acids and to applications thereof in the treatment of skin and mobility conditions affected by inflammatory conditions.

### 2. Prior Art

It is nowadays generally well accepted that the type of food ingested by individuals affects their health status in all stages of live. Nutrition is not only considered as fuelling the body with macro- and micro-nutrients but also as a critical part of health, development and aging.

A healthy diet is widely accepted to assist individuals in living longer, maintain a healthy condition and reduce the risk of developing diseases. It protects against many chronic non-communicable diseases, such as diabetes, heart disease and inflammatory conditions. Eating a variety of foods, mainly derived from plants consuming less salt, sugars and saturated and industrially-produced trans-fats, are considered essential for a healthy diet.

In most cases daily diets yet cannot be compiled to provide all micro-nutrients necessary to provide a well balanced and healthy food mixture, so that individuals tend to ingest supplements to be added to their daily nutritional intake. Such products may be eaten as such or adjoined to the meals to be prepared. They are suitable to provide individuals with a wide range of nutrients found to provide health benefits.

In the past a focus had been given among others to poly-unsaturated fatty acids, that were reported to help build brain cells, support heart health, protect against stroke and reduce inflammatory reactions. Since the body cannot produce these compounds on its own it is a premise to ingest them from exogeneous sources, e.g. from seafood, flaxseed, chia seeds, walnuts, or algae. In many cases individuals do yet not eat these type of food quite often so that supplementation therewith is a proper means to provide these compounds.

Representatives of polyunsaturated fatty acids are omega-3 fatty acids, particularly eicosapentaenoic acid (EPA) and docosahexaenoic acid (DHA), which have been found to beneficially affect skin and mobility by alleviating inflammatory conditions linked to skin issues and joint degradation.

Compositions comprising omega-3- and other fatty acids have been developed for providing such fatty acids to a subject. As such, HRP20250125 T1 discloses compositions comprising fish oil and medium-chain triglycerides (MCT) and/or omega-3 fatty acids and medium-chain triglycerides (MCT). These compositions may further comprise, alpha-tocopherol, or one or more fatty acids. They are adapted to provide nutritional supplementation to a subject and/or to treat or prevent certain conditions. PH12014500105 A1 further discloses microbial oils containing omega-3 polyunsaturated fatty acids comprising docosahexaenoic acid, eicosapentaenoic acid, and optionally docosapentaenoic acid and dosage forms containing such oils. MX373783 B refers to pharmaceutical compositions comprising EPA, DHA and a cardiovascular agent.

Another known type of essential poly-unsaturated fatty acids are omega-6-fatty acids mainly found in vegetable oils, nuts and seeds. Like omega-3 also omega-6 fatty acids have various functions in the body and must be supplied to the organism via exogeneous sources. The role of omega-6 fatty acids in relation to health benefits is yet contradictory. On the one hand, omega-6 fatty acids seem to reduce the risk of developing cardiovascular diseases such as heart attacks or strokes by positively influencing fat levels and blood pressure. Yet, ingesting too much of these essential fatty acids was suspected of inducing early stages of vascular calcification via their pro-inflammatory effect, which in turn favours cardiovascular diseases.

The main objection against omega-6 fatty acids is that the body is capable to convert the most common one, linolenic acid, into arachidonic acid, a building block for molecules that may promote inflammation, blood clotting, and the constriction of blood vessels. Likewise, the body may also converts arachidonic acid into molecules that calm inflammation and fight blood clots. For among these reasons there was a concern in the art to use higher amounts of omega-6 fatty acids.

Apart from finding a suitable ratio of omega-6/omega-3 fatty acids most compositions comprising the above fatty acids also suffer from the disadvantage to exhibit an odour disliked by most individuals, in particular pets.

Accordingly, there is still a need of oil compositions that can provide an advantageous blend of fatty acids while also being palatable in particular to pets which will not eat an oil composition they distaste.

### SUMMARY OF THE INVENTION

The present invention has been accomplished to solve the deficiencies of the prior art

According to one aspect the present invention pertains to an oil composition comprising a ratio of omega-6 to omega-3 fatty acids of from 1:4 to 1:6.

According to another aspect the omega-6 fatty acids are represented by linoleic acid (LA) and the omega-3 fatty acids are represented by docosahexaenoic acid (DHA), eicosapentaenoic acid (EPA), alpha-linolenic acid (ALA) or a mixture thereof.

The invention further provides an oil composition, wherein ratio of omega-6 to omega-3 fatty acids is accomplished by mixing golden flaxseed oil, fish oil, sunflower oil, and krill oil.

The invention also pertains to ingestible products containing such oil compositions, such as food products or supplements.

According to another aspect the present invention also discloses the compositions described herein for use in the treatment of conditions associated with inflammatory reactions and/or conditions to improve among others the skin condition and mobility capability of an individual to whom the present ingestible products are administered.

### BRIEF DESCRIPTION OF FIGURES

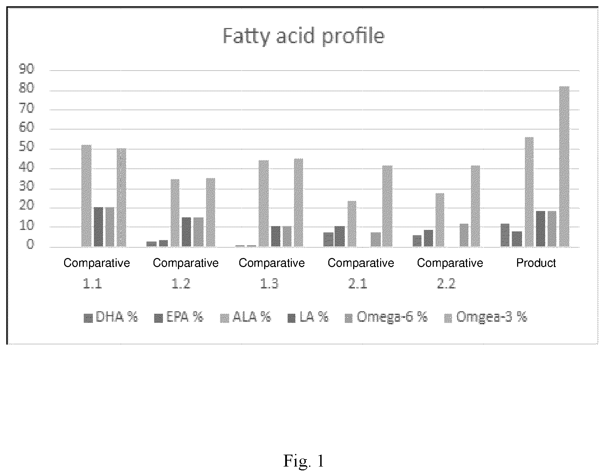

Fig. 1 shows the fatty acid profile of oil compositions provided on the market, the amount of omega-6 : omega 3 fatty acids and the respective compounds.

### DETAILED DESCRIPTION

In the following description exemplary embodiments are explained, which are not to be considered as limiting the scope of the invention but are provided for illustration only.

According to a first embodiment the invention provides an oil composition comprising omega-6 fatty acids and omega-3 fatty acids in an amount/ratio of from 1:4 to 1:6. Preferred ratios are 1:4,1; 1:4,2; 1:4,3; 1:4,4; 1:4,5; 1:4,6; 1:4,7; 1:4,8; 1:4,9; 1:5,0; 1:5,1; 1:5,2; 1:5,2; 1:5,3; 1:5,4; 1:5,5; 1:5,6; 1:5,7; 1:5,8 or 1:5,9, while most preferred ratios being 1:5 or 1:4.5.

According to a preferred embodiment the omega-6 fatty acid is linoleic acid.

According to another preferred embodiment the omega-3 fatty acids are selected from docosahexaenoic acid (DHA), eicosapentaenoic acid (EPA), alpha-linolenic acid (ALA) or a mixture thereof.

The oil composition may contain linoleic acid in an amount of 10-25% by volume, docosahexaenoic acid in an amount of from 5-15% by volume, eicosapentaenoic acid in an amount of from 5-15% by volume and alpha-linolenic acid in an amount of 45-60% by volume.

The linoleic acid (LA) may be comprised in the oil compositions in an amount ranging from 11-25%, 12-25%, 13-25%, 14-25%, 15-25%, 16-25%, 17-25%, 18-25%, 19-25%, 20-25%,21-25%, 22-25%, 23-25%, 24-25% or in the range of from 10-24%, 10-23%, 10-22%, 10-21%, 10-20%, 10-19%, 10-18%, 10-17%, 10-16%, 10-15%, 10-14%, 10-13%, 10-12% or 10-11%, while also including ranges limited by combinations of either of the above lower and upper limits.

According to an embodiment, docosahexaenoic acid (DHA) and/or eicosapentaenoic acid (EPA) may independently be comprised in the oil composition each in ranges from 6-15%, 7-15%, 8-15%, 9-15%, 10-15%, 11-15%, 12-15%, 13-15%, 14-15%, or in ranges from 5-14%, 5-13%, 5-12%, 5-11%, 5-10%, 5-9%, 5-8%, 5-7%, or 5-6%. Ranges are also included limited by combinations of either of the above-mentioned lower and upper limits.

According to an embodiment, alpha-linolenic acid may be comprised in the oil composition in a range from 46-60%, 47-60%, 48-60%, 49-60%, 50-60%, 51-60%, 52-60%, 53-60%, 54-60%, 55-60%, 56-60%, 57-60%, 58-60%, 59-60%, or in a range from 45-59&, 45-58%, 45-57%, 45-56%, 45-55%, 45-54%, 45-53%, 45-52%, 45-51%, 45-50%, 45-49%, 45-48%, 45-47%, or 45-46%. Ranges are also included limited by combinations of either of the above-mentioned lower and upper limits.

The ratio of omega-6 and omega-3 fatty acids in the claimed oil compositions may be obtained by mixing any suitable source for the respective ingredients, but are preferably derived from golden flaxseed oil, fish oil, sunflower oil and krill oil.

Golden flaxseed oil is oil obtained from *Linum usitatissimum.* Also possible is a further embodiment, in which golden flaxseed oil is replaced with brown flaxseed oil. Fish oil may be obtained from any fish species, in particular any "oily" sea fish, e.g. the Atlantic salmon (*Salmo salar)* or the Sockeye salmon (*Oncorhynchus nerka*)*.* Salmon oil provides the highest percentage poly-unsaturated fatty acids. Sunflower oil may be obtained from the common sunflower (*Helianthus annuus*)*.* Krill oil may be obtained from the Antarctic krill (*Euphausia superba*)*.* The oil compositions may contain further ingredients, such as anti-oxidants, excipients or additional fatty oils of other sources.

The invention further provides an ingestible product comprising an oil composition described above, which may be selected from a food product or a nutritional supplement.

The food product may be any nutritional product, into which the present oil composition may be included such as juices of fruit or vegetable source, milk products, such as milk, yogurt, kefir, cheese, ice cream, soft drinks, pastries etc.. The oil composition may also be formulated as nutritional supplements containing, if desired in concentrated form and as such in higher doses allowing a higher absorption thereof. Likewise, the food product may also be designed for animals, for example pets, wherein the compounds as illustrated herein are mixed into conventional pet food in any amount with the proviso of not deterioration the physical appearance and taste of the pet food or is directly administered to the animal.

According to an embodiment, the food supplement may essentially consist of the oil composition. The food supplement may further include any acceptable excipient, such as a filler, a binder, a preservative, an anti-oxidant, or any further excipient, acceptable for ingestion or a flavour compound.

The food supplement may be in form of a dietary food, in form of a liquid, in particular an oily liquid, or an emulsion. The food supplement may also be in the form of a capsule, in which the liquid is filled and which is solved, when ingested, e.g. under stomach acid conditions. The food supplement may also be in the form of a powder, or soft chew, sauce, ingestible cream, gummies, paste, gel .

The food supplement provides fatty acids, as detailed above that are capable of decreasing inflammation reactions. According to the present invention, the term "inflammation" may refer to an inflammatory disease, disorder or the symptoms thereof. The inflammation may be a chronic or an acute inflammation. For example, an inflammation may be a skin condition based on inflammatory reactions, such as dermatitis, pruritus, redness, or hair loss. The inflammation may also be a condition of the skeletal apparatus such as an inflammation-caused cartilage breakdown or arthritis.

According to an embodiment, the subject to which the food supplement is supplied is a mammal, in particular a human, a cat or a dog. Any subject, according to the embodiment, may be suffering from any of the above conditions or may be prone to develop any of the above conditions.

According to a further embodiment the oil composition or the ingestible product as described herein may be used for the treatment of an inflammatory condition. The composition may preferably further include an excipient. An excipient may be a filler, a binder, a preservative, an anti-oxidant, or any further excipient, acceptable for ingestion. The composition is preferably a pharmaceutical composition. In that case, the excipient is a pharmaceutically acceptable excipient.

The inflammatory condition may be a skin condition, e.g. dermatitis, pruritus, redness, or hair loss. The condition may also be inflammation-caused cartilage breakdown or arthritis. According to the embodiment, the subject treated with the ingestible product may be a mammal, e.g. a cat, a dog or a human.

The pharmaceutical composition may include an additional anti-inflammatory agent or antiphlogistic. The anti-inflammatory agent may be a nonsteroidal agent, an anti-leukotriene or a corticosteroid. Preferably, the pharmaceutical composition is applied such that the additional anti-inflammatory agent is administered in an effective dose. The additional anti-inflammatory agent may also be administered in a dose lower than effective, when applied solely for the treatment of inflammatory conditions, since the combination of the oil composition and a further anti-inflammatory agent may provide an add-on efficacy compared to what is found for the sole components. Preferably, the additional anti-inflammatory agent is lipophilic, such that it may easily be solved in the oil of the oil composition.

The invention further provides a method of manufacturing an oil composition or an ingestible product or a pharmaceutical composition as described herein. The method includes providing the golden flaxseed oil, fish oil, sunflower oil and krill oil, and optionally a further oil; mixing said oils at a temperature sufficiently high for enhancing mixing properties and sufficiently low for preventing decomposition; encapsulating said oil mixture or alternatively adding an emulsifier. The skilled person is acquainted with the respective temperature limits of all components for the step of mixing. In the case of manufacturing a pharmaceutical composition, the additional anti-inflammatory agent may be added in the mixing step, if the additional anti-inflammatory agent is lipophilic.

The compositions/products of the invention may assist in managing itching and skin-related issues in target individuals, such as pets. The oil compositions of the invention are capable to promote healthy skin and a shiny coat. In particular the optimised omega-6/omega-3 ratio with overall high levels of omega-3 fatty acids, particularly EPA and DHA, have been found to convey a shiny appearance to dog's coat.

The present oily compositions demonstrate superior quality and efficiency based on its fatty acid compositions. Even with a lower percentage of certain base oils, the present oil compositions deliver remarkably higher concentrations of essential fatty acids, highlighting their advanced formulation and superior ingredient sourcing. Higher omega-3 contents with lower oil volumes may be achieved. In the art 52% ALA with 95% flaxseed oil had been obtained while the present oil composition reaches higher levels with less than a quarter of that flaxseed oil amount. An optimized LA (linoleic acid) profile is obtained, which is important for skin health and anti-inflammatory benefits. Also high EPA and DHA levels are provided, both vital for cognitive function and anti-inflammatory effects.

The present oil compositions/ingestible products provide a balanced Omega-3 to Omega-6 Rati, reducing inflammation and promoting overall well-being. They may provide more potency in less quantity (volume). The present formulations allow pet owners to use less product while delivering higher fatty acid doses.

Further, the superior quality of flaxseed and fish oils ensures that ALA, DHA, and EPA are more readily absorbed and utilized by the body. The synergy between the ingredients provides the best health benefits for dogs and cats.

In summary, the compositions described herein are designed to support joint health and improve mobility in target individuals, to help ease stiffness, promote joint function, and support an active lifestyle.

### Examples

A comparative analysis of pet oil compositions and a product according to the invention, reveals that the present oil composition demonstrates superior quality and efficiency based on its fatty acid composition. The quantitative analysis proves that even with a lower percentage of certain base oils, the present oil compositions, based on the mentioned source materials, delivers remarkably higher concentrations of essential fatty acids, highlighting its advanced formulation and superior ingredient sourcing.

6 groups of dogs, comprising each 5 shepherds per group, were been fed the same regular diet as nutrition. In addition all dogs received a supplement (pumped oils) containing different oil compositions as outlined in table 1 below in the same amount and mixed with the feed.

**Table 1: FATTY ACID PROFILE COMPARISON**

| **Composition** | **DHA %** | **EPA %** | **ALA %** | **LA %** | **Omega-6 %** | **Omega-3 %** |
|---|---|---|---|---|---|---|
| **1.1** | 0 | 0 | 52 | 20 | 20 | 50 |
| **1.2** | 2 | 3 | 34 | 15 | 15 | 35 |
| **1.3** | 0.5 | 0.45 | 44 | 10 | 10 | 45 |
| **2.1** | 7.02 | 10.12 | 23.34 | 0 | 6.64 | 41.5 |
| **2.2** | 5.75 | 8.28 | 27.12 | 0 | 11.4 | 41.2 |
| **Product** | 11.6 | 7.4 | 55.6 | 17.9 | 17.9 | 82.1 |

The oil composition contained a different ratio of omega-6/omega-3 fatty acids and also different ingredients reflecting the respective fatty acid group.

The dogs were offered the supplemented feed for 1 month, while the coat was optically and physically examined at the beginning and the end of the experiment. At the end of the 1 month test period it was noted that the group receiving the inventive product exhibited a full and shiny coat as compared to the comparative groups.

Thus, the present oil compositions deliver a fatty acid profile with lower raw oil volumes and demonstrates a superior potency and concentration of effective ingredients compared to comparative compositions.

## Claims

1. An oil composition, comprising omega-6 fatty and omega-3 fatty acids in a ratio between 1:4 and 1:6.

2. The oil composition according to claim 1, wherein the ratio of omega-6 fatty acids and omega-3 fatty acids is 1:4.5.

3. The oil composition according to claim 1 or 2, comprising:
docosahexaenoic acid in an amount of from 5-15% by volume;
eicosapentaenoic acid in an amount of from 5-15% by volume;
alpha-linolenic acid in an amount of 45-60% by volume, and
linoleic acid in an amount of 10-25% by volume.

4. The oil composition according to any of the preceding claims comprising:
golden flaxseed oil,
fish oil,
sunflower oil, and
krill oil.

5. The oil composition of claim 1, wherein the fish oil is salmon oil.

6. An ingestible product comprising an oil composition according to any of the claims 1-5.

7. The ingestible product, which is a food product or a supplement

8. The ingestible product according to claim 6 for use in treating or preventing inflammatory conditions in a subject.

9. The ingestible product for use of claim 8, wherein the inflammatory condition is a skin condition, preferably selected from dermatitis, pruritus, redness, or hair loss.

10. The ingestible product for use according to claim 8, wherein the inflammation is selected from inflammation-caused cartilage breakdown and arthritis.

11. The ingestible product for use according to any of claims 8-10, wherein the subject is a mammal.

12. The ingestible product for use according to claim 10, wherein the mammal is a cat, a dog or a human.

13. The ingestible product for the use of any of claims 8-12, further comprising an additional ingredient selected from an excipient, a flavour compound or an additional anti-inflammatory agent.
